(19) Europäisches Patentamt

European Patent Office

Office européen des brevets

(11) Veröffentlichungsnummer: **0 272 512 B1**

(12) **EUROPÄISCHE PATENTSCHRIFT**

(45) Veröffentlichungstag der Patentschrift: **10.03.93**

(21) Anmeldenummer: **87117866.1**

(22) Anmeldetag: **03.12.87**

(51) Int. Cl.5: **C08F 10/00**, C08F 2/00, C08F 6/00

(54) **Verfahren zur Reduktion der Emission von Kohlenwasserstoffen bei Entspannungsvorgängen an Hochdruckpolymerisationsreaktoren.**

(30) Priorität: **04.12.86 DE 3641513**

(43) Veröffentlichungstag der Anmeldung:
**29.06.88 Patentblatt 88/26**

(45) Bekanntmachung des Hinweises auf die
Patenterteilung:
**10.03.93 Patentblatt 93/10**

(84) Benannte Vertragsstaaten:
**AT BE DE FR GB NL SE**

(56) Entgegenhaltungen:
**EP-A- 0 018 883      DE-A- 2 131 445
FR-A- 2 116 147      FR-A- 2 165 018
FR-A- 2 313 400      FR-A- 2 358 427**

(73) Patentinhaber: **BASF Aktiengesellschaft
Carl-Bosch-Strasse 38
W-6700 Ludwigshafen(DE)**

(72) Erfinder: **Kanne, Friedrich, Dr.
Antoniusstrasse 3
W-5047 Wesseling(DE)**
Erfinder: **Mietzner, Franz Georg, Dr.
Neuhausener Weg 3
W-6700 Ludwigshafen(DE)**
Erfinder: **Pfleger, Klaus, Dr.
Otto-Strasse 6
W-5047 Wesseling(DE)**
Erfinder: **Kursawe, Siegfried
Fasanenweg 4
W-5047 Wesseling(DE)**
Erfinder: **Boettcher, Klaus, Dr.
Antoniusstrasse 5
W-5047 Wesseling(DE)**
Erfinder: **Arnold, Gerhard
Weissdornweg 4
W-5047 Wesseling(DE)**

EP 0 272 512 B1

**Beschreibung**

Die Erfindung betrifft ein Verfahren zur schnellen Herabsetzung des Drucks in kontinuierlich betriebenen Hochdruckpolymerisationssystemen, in denen Ethylen oder ein Gemisch aus Ethylen und mit Ethylen mischpolymerisierbaren Verbindungen bei Drücken von 500 bis 5000 bar und Temperaturen von 150 bis 400°C polymerisiert und die nicht umgesetzten Gasmengen nach Entspannen auf 200 bis 400 bar durch das Hochdruckkreisgassystem in das Polymerisationssystem zurückgeführt werden.

Bei diesem Verfahren wird der Druck herabgesetzt auf einen Druck unterhalb des jeweiligen Reaktionsdrucks, wenn ein vorgegebener Druck- und/oder Temperaturwert überschritten ist oder bei anderen Störungen, durch Öffnen eines oder mehrerer am Hochdruckpolymerisationssystem angebrachter Entspannungsvorrichtungen und Überführen des heißen Reaktionsgemisches aus dem Polymerisationssystem über eine oder mehrere Entspannungsleitungen durch ein oder mehrere Abscheidesysteme in die Atmosphäre.

Bei einem derartigen Verfahren sind Maßnahmen erforderlich, um die bei Zersetzungen auftretenden hohen Drücke und/oder Temperaturen im Hochdruckpolymerisationssystem, die zu Schäden z.B. bei einem Rohrreaktor führen können, zu vermeiden. Dazu wird das Reaktionssystem sofort entspannt auf einen Druck, der weit unterhalb des Reaktionsdrucks liegt, bei gleichzeitiger Unterbrechung der Initiatorzufuhr. Dadurch wird die Polymerisationsreaktion, die stark druckabhängig ist, abgebremst. Aus Sicherheitsgründen ist es nicht zulässig, das bei Zersetzungen oder anderen Notabstellungen freiwerdende heiße Reaktionsgemisch aus Ethylen, Polyethylen und Zersetzungsprodukten in geschlossene Behälter aufzufangen. Die Entspannung des Reaktors muß vielmehr an die Atmosphäre erfolgen. Hierbei kommt es dann zu Emissionen von heißen Gemischen aus Polyethylen, Ethylen, Ruß und Zersetzungsprodukten. Neben der hierdurch, insbesondere durch die Feststoffe hervorgerufenen Belästigung der Umwelt kann es zur Ausbildung von Gaswolken aus Kohlenwasserstoffen, wie Ethylen, Methan, Wasserstoff und Ruß kommen, die im Gemisch mit Luft zu explosionsartigen Zündungen befähigt sein könnten. Die explosionsartige Zündung solcher Gaswolken stellt eine erhebliche Gefahr für die Anlage und die nähere Umgebung dar. Sie sollte deshalb unbedingt vermieden werden.

Es ist bereits bekannt, zur Erfüllung der Sicherheitserfordernisse bei der Entspannung von Hochdruckpolymerisationssystemen an das System Vorrichtungen anzubringen, die im wesentlichen aus einem Venturirohr in der Ausströmungsbahn des Gases und einem Vorratsbehälter mit einem Fluidum besteht, das zur Kühlung des Gases im Zeitpunkt der Entspannung eingespritzt wird (vgl. britisches Patent 1 393 919). Das Fluidum kann z.B. Wasser sein.

Aus dem britischen Patent 827 682 ist ein Verfahren zur Hochdruckpolymerisation von Ethylen bekannt, bei der eine Apparatur verwendet wird, welche unmittelbar im Anschluß an den Polymerisationsraum ein zusätzliches Ventil enthält, mit dessen Hilfe man im Falle von Überhitzungen die entstandenen Zersetzungsprodukte über einen Entspannungsbehälter direkt entfernen kann, ohne daß die kontinuierliche Aufarbeitung der normalen Polymerisationsprodukte gestört wird oder unterbrochen werden muß. Bei diesem Verfahren werden die festen Abfallprodukte gesondert aufgefangen, während über die Kühlung und Reinigung der entstandenen gasförmigen Zersetzungsprodukte keine gesonderte Apparatur vorgesehen ist.

Bei einem anderen Verfahren zur Herstellung von Ethylenpolymerisaten unter hohem Druck und bei hohen Temperaturen wird bei Überschreiten eines bestimmten Drucks auf andere Weise als über die normale Abflußleitung über eine bei diesem Druck betätigte Sicherung die Reaktionsmasse durch ein Abflußrohr abgeführt und die ausströmende Reaktormasse mit Wasser gemischt (vgl. US-Patent 3 781 256). Zu diesem Zweck sind in einem mit der Entspannungsleitung verbundenen Raum mehrere ganz oder teilweise mit Wasser gefüllte Behälter angebracht, die bei den herrschenden Temperatur- und Druckbedingungen zu Bruch gehen sollen. Die wassergefüllten Behälter sind Beutel aus einem thermoplastischen Kunststoff. Bei diesem Verfahren wird also den über Dach abziehenden Zersetzungsgasen Wasser beigemischt, so daß durch die Abkühlung des heißen Reaktionsgemischs und der Zersetzungsprodukte explosionsartige Zündungen in der Luft weitgehend vermieden werden können.

Es ist ferner aus dem US-Patent 4 115 638 ein Verfahren bekannt, bei dem jeweils der aus der Entspannungsleitung kommende Strahl aus entspanntem, heißem Reaktionsgemisch nicht unter der Wasseroberfläche und in einem Winkel von 0 bis 45° zur Wasseroberfläche in einen zum Teil mit Wasser gefüllten Entspannungsbehälter geführt wird, wobei der Strahl die Wasseroberfläche berühren oder treffen muß.

Aus der Literatur sind noch eine Reihe anderer Verfahren bekannt, bei denen der gesamte Inhalt des Polymerisationssystems in die Atmosphäre entspannt wird, wobei die Gefahr von Explosionen beim Entspannen des Reaktionsgemischs ins Freie verhindert ist (vgl. US-Patente 4 339 412, 4 424 319 oder 4 534 924).

2

Es ist ein Nachteil der bekannten Verfahren zur schnellen Herabsetzung des Drucks in kontinuierlich betriebenen Hochdruckpolymerisationssystemen, daß eine große Menge an Kohlenwasserstoffen, insbesondere Ethylen, emittiert wird. Bei den in der Praxis üblicherweise eingesetzten Automatikschaltungen, die für eine rasche Entfernung des Reaktionsgemisches bei Zersetzungen notwendig sind, wird so verfahren, daß der komplette Reaktor ins Freie entspannt wird, d.h. das gesamte unter Höchstdruck stehende Reaktionsgemisch, von den Kompressoren bis zum Reaktorende bzw. Hochdruckproduktabscheider, wird zur Atmosphäre abgegeben. Je nach der Größe des eingesetzten Reaktors werden bei einem Entspannungsvorgang bis zu 4 Tonnen Kohlenwasserstoffe, speziell Ethylen, emittiert, was zu einer sehr starken Belastung der Umwelt führt.

Der vorliegenden Erfindung liegt daher die Aufgabe zugrunde, ein Verfahren zu entwickeln, mit dem es gelingt, die bei Entspannungsvorgängen an Röhrenreaktoren oder Autoklaven, die zur Polymerisation von Ethylen eingesetzt werden, auftretende Emission von Kohlenwasserstoffen zu reduzieren.

Die Aufgabe wird erfindungsgemäß durch Verfahren gemäß Patentansprüchen 1 bis 3 gelöst.

Unter einer schnellen Herabsetzung des Drucks wird eine Druckentspannung verstanden, bei der innerhalb von etwa 30, bevorzugt 5 bis 20 Sekunden nach Betätigung einer Entspannungsvorrichtung der Druck im Hochdruckpolymerisationssystem, in der Technik Reaktor genannt, auf mindestens 50 % des ursprünglichen Drucks herabgesetzt ist. Eine schnelle Entspannung auf niedere Drücke ist wichtig, damit Schäden am Reaktor vermieden werden.

Die kontinuierlich betriebenen Hochdruckpolymerisationssysteme, in denen Ethylen oder ein Gemisch aus Ethylen und mit Ethylen mischpolymerisierbaren Verbindungen bei Drücken von 500 bis 5000 bar und Temperaturen von 150 bis 400°C polymerisiert werden, wobei die nichtumgesetzten Gasmengen nach Entspannen auf 200 bis 400 bar durch das Hochdruckkreisgassystem in das Polymerisationssystem zurückgeführt und die entstandenen Ethylenpolymerisate im Hochdruckproduktabscheider abgeschieden werden, sind in der Literatur einschlägig bekannt. Angaben über Verfahren, bei denen Rohrreaktoren bzw. Autoklavreaktoren benutzt werden, finden sich beispielsweise in der Veröffentlichung "Ullmanns Encyklopädie der technischen Chemie", 4. Auflage, 19. Band, Seiten 169 bis 226.

Das Herabsetzen des Drucks im Polymerisationssystem auf einen Druck unterhalb des jeweiligen Reaktionsdrucks, aber auf mindestens 50 % des ursprünglichen Reaktionsdrucks, wird dann vorgenommen, wenn vorgegebene Druck- und/oder Temperaturgrenzwerte überschritten werden oder andere Störungen auftreten. Ein Überschreiten vorgegebener Druck- und/oder Temperaturgrenzwerte kann z.B. dann eintreten, wenn die Polymerisationsreaktion infolge fehlerhafter Initiatoreinspritzung oder mangelnder Kühlung des Reaktors in eine Zersetzungsreaktion umschlägt, bei denen sich der Reaktorinhalt zum Teil in Ruß und gasförmige Zersetzungsprodukte wie Methan und Wasserstoff umwandelt. Da aus Gründen einer hohen Ethylenumsetzung die Reaktionsbedingungen im Reaktor dicht bei dem kritischen Punkt liegen, bei dem eine Zersetzung von Ethylen auftritt, kann es passieren, daß durch eine geringere Wärmeabfuhr infolge von Ablagerungen von Polyethylen an der Reaktorwandung oder durch eine unzureichende Durchmischung des im Reaktor befindlichen heißen Gemisches die Reaktionsbedingungen örtlich diesen kritischen Punkt erreichen, wodurch eine Zersetzung auftritt. Die dabei auftretenden Reaktionen sind stark exotherm, so daß sich im Reaktor ein rascher Temperatur- und/oder Druckanstieg einstellt. In diesem Falle sind die vorgegebenen Druck- und/oder Temperaturgrenzwerte überschritten. Andere Störungen können auftreten, wenn durch Stromausfall die Anlage gefährdet ist oder wenn z.B. ein Verdichter ausfällt, wodurch zuwenig Ethylen eingespeist wird.

Das Öffnen eines oder mehrerer am Reaktor angebrachter Entspannungsvorrichtungen erfolgt durch einschlägig übliche Entspannungsventile. Anstelle von Entspannungsventilen, deren Öffnung über Druck- und/oder Temperaturgrenzwerte erfolgt, können prinzipiell auch Berstsicherungen oder Sicherheitsventile verwendet werden, die oberhalb bestimmter Druckgrenzwerte selbsttätig ansprechen und eine teilweise Entleerung des Reaktors bewirken. Ebenso ist es möglich, gesteuerte neben selbsttätig wirkenden Entspannungsvorrichtungen einzusetzen. Man arbeitet jedoch vorteilhaft mit gesteuerten Entspannungsvorrichtungen.

Das Entfernen des entspannten heißen Reaktionsgemisches aus dem Reaktor wird über eine oder mehrere Entspannungsleitungen, die alle in einen Entspannungsbehälter münden, vorgenommen. Die Entspannungsleitungen bestehen aus Rohren, die sowohl mit dem Reaktor als auch mit dem Abscheidesystem verbunden sind, so daß das gegebenenfalls aus dem Reaktor hinausströmende Gasgemisch in das Abscheidesystem oder den Entspannungsbehälter gelangt. Der Entspannungsbehälter ist als Abscheidetopf so ausgelegt, daß er einen Druck von mindestens 10 bar aushält. Der Entspannungsbehälter ist am oberen Ende offen, so daß das entweichende Gas bzw. Gas-/Produktgemisch entweder direkt in die Atmosphäre oder durch einen zweiten, gleichermaßen aufgebauten Abscheidetopf geleitet wird, bevor es in die Atmosphäre gelangt. Nach bekannten Verfahren kann in den Strom des entweichenden Gases Wasser eingespritzt (britisches Patent 1 393 919) oder Wasser durch Bersten von wassergefüllten Kunststoffbehältern eingebracht (US-Patent 3 781 256) oder an die Wasseroberfläche geführt werden (vgl. US-Patent 4 115 638).

Nach erfindungsgemäßem Verfahren wird das Hochdruckpolymerisationssystem gleichzeitig mit der Einleitung des Entspannungsvorgangs in mehrere Teilabschnitte abgesperrt und lediglich der Teilabschnitt zur Atmosphäre entspannt, in dem die Auslösung für den Entspannungsvorgang liegt.

Nach bevorzugtem Verfahren werden diejenigen Teilabschnitte, in denen die Auslösung für den Entspannungsvorgang nicht vorliegen, synchron mit der Einleitung der Entspannung zur Atmosphäre in das Hochdruckkreisgassystem entspannt.

Besonders bevorzugt ist ein Verfahren, bei dem durch einen Produktabscheider in das Hochdruckkreisgassystem entspannt wird.

Die Entspannungen des Reaktionsgemisches aus den Reaktionsapparaturen (Röhrenreaktoren oder Autoklaven) werden nicht nur bei Zersetzungen ausgelöst, sondern auch in anderen Fällen. So wird beispielsweise der Reaktor auch bei Ausfall von Steuerungs- bzw. Überwachungsgeräten automatisch außer Betrieb genommen; erfindungsgemäß wird auch hier lediglich der Teilabschnitt, in dem das Ereignis eingetreten war, ins Freie entspannt.

Bei dem erfindungsgemäßen Verfahren sind über die gesamte Länge des Reaktors eine Vielzahl von Temperaturmeßstellen und mehrere Druckmessungen verteilt. Falls eine der oberen Grenzwertmarken für die Druck- und Temperaturüberwachung erreicht wird, wird das sog. Notprogramm ausgelöst. Dies ist beispielsweise bei einer Zersetzung, aber auch bei einer Fehlmessung bzw. bei einem anderen technischen Defekt der Fall; bei den beiden letzteren Fällen spricht man von sog. Fehlauslösungen.

Die in der Praxis dabei benutzten Automatikschaltungen zur Realisierung des sog. Notprogrammes sind handelsübliche Meß- und Regelsysteme (z.B. AEG-Logistat-Steuerung), mit denen eine Reihe von hydraulisch betätigten Ventilen angesteuert werden.

Bei dem erfindungsgemäßen Verfahren besitzt im einfachsten Fall der Rohrreaktor nur eine Reaktionszone, in der Praxis werden jedoch auch Mehrzonenreaktoren eingesetzt. Weitaus seltener arbeitet man mit einer Kombination aus Autoklav und Rohrreaktor, die dabei in Serie geschaltet sind. Auch für diese Reaktortypen (Mehrzonenreaktoren, Autoklav in Kombination mit Rohrreaktoren) läßt sich das erfindungsgemäße Verfahren gemäß Patentansprüchen 1 bis 3 anwenden.

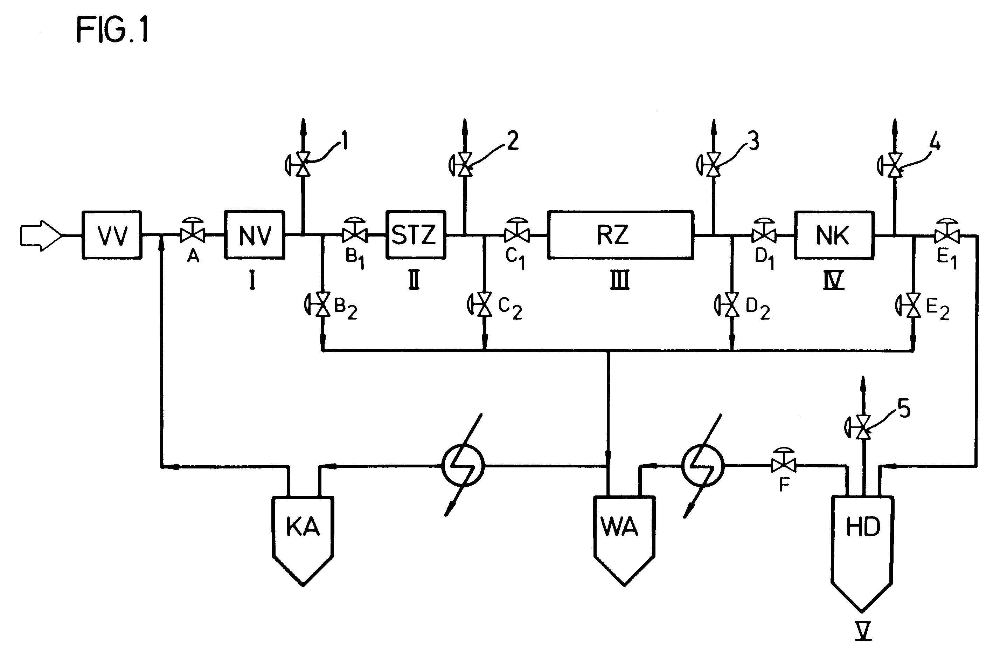

Das im folgenden beschriebene Verfahren für einen Einzonenreaktor wird in Figur 1 schematisch dargestellt.

Der Reaktor kann in fünf Teilabschnitte abgeschottet werden; dies wird bei Auslösung des sog. Notprogrammes durch hydraulisch betätigte Absperrventile durchgeführt. Es handelt sich um die folgenden Bereiche des Reaktors:

| Teilabschnitt | | Bereich zwischen den Ventilen |
|---|---|---|
| I | Kompressor (NV) | A und $B_1$ |
| II | Startzone (STZ) | $B_1$ und $C_1$ |
| III | Reaktionszone (RZ) | $C_1$ und $D_1$ |
| IV | Nachkühler (NK) | $D_1$ und $E_1$ |
| V | Hochdruck-Abscheider (HD) | $E_1$ und F |

Jeder Teilabschnitt des Reaktors ist mit einem Entspannungsventil (1 - 5) ausgestattet; die Entspannungsventile sind über Entspannungsleitungen mit einem Abscheidesystem, dessen Austrittsrohr ins Freie geführt ist, verbunden. Bei einem Entspannungsvorgang durchläuft das entspannte Reaktionsgemisch aus dem Teilabschnitt des Reaktors, in dem die Ursache für die Auslösung lag, das genannte Abscheidesystem, bevor es zur Atmosphäre gelangt.

Die Teilabschnitte I, II, III und IV können, falls die Ursache einer Auslösung nicht in ihnen lag, über eine Abfahrleitung zum Hochdruckkreisgassystem, kurz Hochdruckkreis bzw. HD-Kreis (300 bar), abgefahren werden. Hierzu werden die Hydraulikventile $B_2$, $C_2$, $D_2$ bzw. $E_2$ geöffnet und die in den entsprechenden Teilabschnitten des Reaktors vorliegenden Reaktionsgemische werden in eine Abfahrleitung eingespeist. Die Abfahrleitung mündet in einem Produktabscheider (WA), der ein Volumen von mindestens 1 $m^3$ haben sollte. Bei Einsatz von Behältern mit einem kleineren Volumen besteht die Gefahr, daß vom entspannten Gas-/Produktgemisch ein Teil der Polyethylenschmelze beim Entspannungsvorgang aus dem Produktabscheider (WA) in die benachbarten Kühler des HD-Kreises transportiert wird; in den Kühlern kommt es zur Ablagerung der erkalteten Schmelze, und Verstopfungen des Hochdruckkreises (HD-Kreis) sind die Folge. Behälter mit einem größeren Volumen als 1 m³ können sich hingegen nur vorteilhaft zum Auffangen des aus den Teilabschnitten des Reaktors abgefahrenen Reaktionsgemisches auswirken.

Der Teilabschnitt V hat als Teil des Hochdruckkreises keine Verbindung zur Abfahrleitung. Falls dieser Teilabschnitt nicht ursächlich an der Auslösung eines Entspannungsvorganges beteiligt ist, schließt das Absperrventil $E_1$, während Ventil F offen bleibt. Liegt hingegen die Auslösungsursache im Teilabschnitt V, dann wird er durch Öffnen des Entspannungsventils 5 ins Freie entspannt, wobei die Absperrventile $E_1$ und F zur Abschottung schließen.

Es kann in der Praxis nun vorkommen, daß beispielsweise eine Zersetzung an der Grenze eines Teilabschnitts ihren Anfang nimmt und auf den benachbarten Bereich übergreift. In diesem Falle werden mit Hilfe der Automatikschaltung beide Abschnitte über das Abscheidesystem ins Freie entspannt; die übrigen Teilabschnitte werden zum HD-Kreis abgefahren.

In Tabelle 1 sind die Entspannungsvorgänge der einzelnen Teilabschnitte des Einzonenreaktors und die jeweiligen Stellungen sowie Schaltvorgänge der Hydraulikventile angegeben.

Die Ausführungen zum Einzonenreaktor gelten sinngemäß für einen Autoklaven; der in Figur 1 als Startzone (STZ) bezeichnete Abschnitt wird beim Start des Autoklaven als solche genutzt, während des Betriebs zur Kühlzone umfunktioniert. Der Autoklav selbst kann als Teilabschnitt II der Figur 1 betrachtet werden.

Für den Mehrzonenreaktor gilt sinngemäß das für den Einzonenreaktor dargelegte Prinzip, es kommen jedoch einige Teilabschnitte hinzu. Für jede weitere Reaktionszone erhöht sich die Zahl der Teilabschnitte um zwei (Reaktionszone und zugehörige Startzone) bzw. drei, falls ein zusätzlicher Kompressor eingesetzt wird.

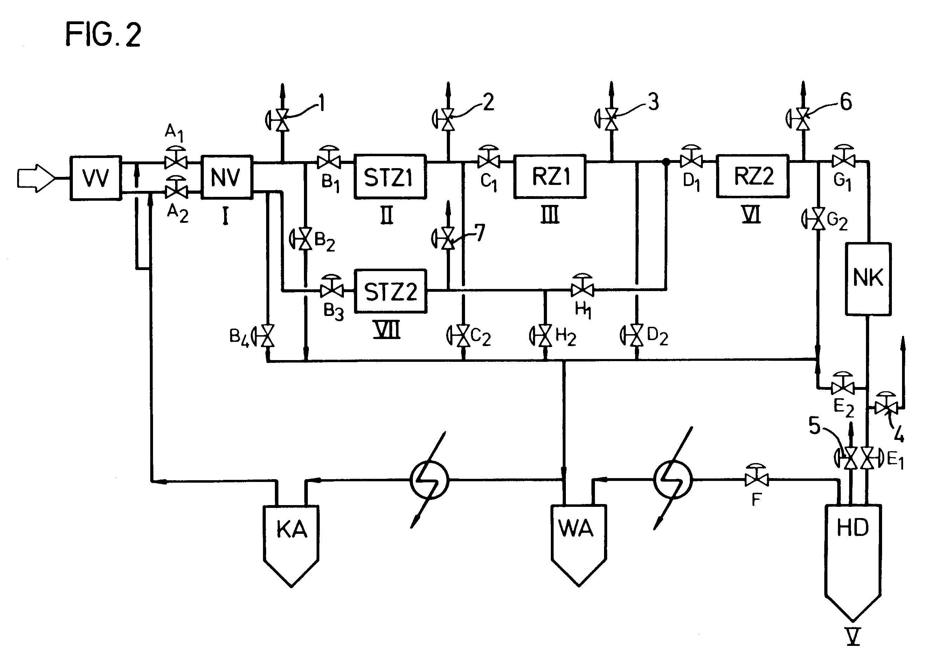

Auch für die Mehrzonenreaktoren sind die einzelnen Teilabschnitte mit Absperrventilen zum Abschotten, mit Entspannungsventilen zur Atmosphäre und mit Entspannungsventilen zum Hochdruckkreis (ausgenommen Teilabschnitt V) ausgerüstet (siehe Figur 2).

In der Tabelle 2 sind für einen Zweizonenreaktor die Entspannungsvorgänge der einzelnen Teilabschnitte und die jeweiligen Ventilstellungen sowie die Schaltvorgänge der Hydraulikventile angegeben.

In den nachfolgenden Beispielen sind für einen mit 30 t/h Reaktionsgemisch beschickten Einzonenreaktor und für einen mit 20 t/h Reaktionsgemisch betriebenen Zweizonenreaktor die Ergebnisse des erfindungsgemäßen Verfahrens im Vergleich zu den Entspannungsvorgängen an den gleichen Reaktoren, die keine erfindungsgemäße Ausrüstung besaßen, dargelegt.

Bei dem geschilderten Einzonenreaktor werden erfindungsgemäß nur noch 7,8 bis 56,25 Gew.-% der im gesamten Reaktor vorliegenden Masse bei Entspannungsvorgängen in die Atmosphäre abgegeben.

Für den angeführten Zweizonenreaktor wird die Menge des bei Entspannungsvorgängen ins Freie entspannte Reaktionsgemisches erfindungsgemäß auf 4,5 bis 50 Gew.-% reduziert.

Beispiele 1 - 5

Ein Einzonenreaktor wurde mit 30 t/h Reaktionsgemisch beschickt und bei einem Druck von 2300 bar betrieben.

Bei den Entspannungsvorgängen der einzelnen Teilabschnitte wurden die folgenden Gas- bzw. Produktmengen in den Hochdruck-Kreis über die Abfahrleitung abgefahren bzw. über das Abscheidesystem ins Freie entspannt.

| Beispiel Nr. | Auslösung (Ereignis) im Teilabschnitt | Reaktionsgemisch wird | | |
|---|---|---|---|---|
| | | zum HD-Kreis gefahren (Menge in t) | ins Freie entspannt (entspannte Menge) in t | in % |
| 1 | I | 1,4 | 1,8 | 56,25 |
| 2 | II | 2,95 | 0,25 | 7,8 |
| 3 | III | 2,6 | 0,6 | 18,75 |
| 4 | IV | 2,95 | 0,25 | 7,8 |
| 5 | V | 2,9 | 0,3 | 9,4 |

Die Masse des im gesamten Reaktor vorliegenden Reaktionsgemisches betrug 3,2 t. Die Prozentangabe bezieht sich auf die Gesamtmasse. Durch das erfindungsgemäße Verfahren gelang es, die Kohlenwasserstoff-Emission auf 7,8 bis 56,2 Gew.-% zu reduzieren.

Vergleichsbeispiel 1 (zu Beispielen 1 - 5)

Der Einzonenreaktor mit einem Durchsatz von 30 t/h Reaktionsgemisch war - analog zu den Beispielen 1 - 5 - bei einem Druck von 2300 bar betrieben worden. Am Reaktor war nicht die Möglichkeit der Absperrung in Teilabschnitte vorhanden, so daß bei der Entspannung die Masse des gesamten Reaktors in die Atmosphäre abgegeben werden mußte.

Beispiele 6 - 12

Ein Zweizonenreaktor wurde mit 20 t/h Reaktionsgemisch beschickt und bei einem Druck von 2100 bar betrieben. Für die einzelnen Teilabschnitte wurden jeweils Entspannungen ausgelöst; dabei wurden die folgenden Gas-/Produktmengen in den Hochdruckkreis abgefahren bzw. über das Abscheidesystem ins Freie entspannt.

Vergleichsbeispiel 2 (zu Beispielen 6 - 12)

Der gleiche Zweizonenreaktor wurde wie bei den Beispielen 6 - 12 mit einem Durchsatz von 20 t/h Reaktionsgemisch bei 2100 bar betrieben. Am Reaktor bestand nicht die Möglichkeit der Absperrung in Teilabschnitte. Die Masse des gesamten Reaktors mußte bei einem Entspannungsvorgang in die Atmosphäre abgegeben werden.

| Beispiel Nr. | Auslösung (Ereignis) im Teilabschnitt | Reaktionsgemisch wird | | |
|---|---|---|---|---|
| | | zum HD-Kreis gefahren (Menge in t) | ins Freie entspannt (entspannte Menge) in t | in % |
| 6 | I | 1,1 | 1,1 | 50 |
| 7 | II | 2,1 | 0,1 | 4,5 |
| 8 | III | 1,95 | 0,25 | 11,4 |
| 9 | IV | 2,1 | 0,1 | 4,5 |
| 10 | V | 1,9 | 0,3 | 13,6 |
| 11 | VI | 1,95 | 0,25 | 11,4 |
| 12 | VII | 2,1 | 0,1 | 4,5 |

Die Masse des im gesamten Reaktor vorliegenden Reaktionsgemisches betrug 2,2 t. Durch das erfindungsgemäße Verfahren gelang es, die Emission an Kohlenwasserstoffen auf 50 bis 4,5 Gew.-% zu reduzieren.

Die Prozentangabe bezieht sich auf die Gesamtmasse.

EP 0 272 512 B1

Tabelle 1: Entspannungsvorgänge an einem Einzonenreaktor
Stellungen und Schaltvorgänge der Hydraulikventile

| Auslösung (Ereignis) im Bereich | Hydraulikventile bleiben geöffnet | geschlossen | öffnen | schließen | Bemerkungen |
|---|---|---|---|---|---|
| I | $C_1$, $D_1$ $E_1$, F | $B_2$, $E_2$ 2 bis 5 | $C_2$, $D_2$ 1 | A, $B_1$ | Abschnitt I wird ins Freie, die übrigen Abschnitte in den HD-Kreis entspannt |
| II | A, $D_1$ $E_1$, F | $C_2$, $E_2$ 1,3 bis 5 | $B_2$, $D_2$ 2 | $B_1$, $C_1$ | II wird ins Freie, die übrigen Abschnitte in den HD-Kreis entspannt |
| III | A, $B_1$ $E_1$, F | $D_2$, $E_2$ 1,2,4,5 | $B_2$, $C_2$ 3 | $C_1$, $D_1$ | III wird ins Freie, die übrigen Abschnitte in den HD-Kreis entspannt |
| IV | A, $B_1$ $C_1$, F | $E_2$ 1 - 3, 5 | $B_2$, $C_2$, $D_2$ 4 | $D_1$, $E_1$ | IV wird ins Freie, die übrigen Abschnitte in den HD-Kreis entspannt |
| V | A, $B_1$ $C_1$, $D_1$ | 1 - 4 | $B_2$, $C_2$, $D_2$ $E_2$, 5 | $E_1$, F | V wird ins Freie, die übrigen Abschnitte in den HD-Kreis entspannt |

Tabelle 2: Entspannungsvorgänge an einem Zweizonenreaktor Stellungen und Schaltvorgänge der Hydraulikventile

| Auslösung (Ereignis) im Abschnitt | Hydraulikventile bleiben geöffnet | bleiben geschlossen | öffnen | schließen | Bemerkungen |
|---|---|---|---|---|---|
| I | $C_1$, $D_1$, $G_1$, $E_1$, $F$, $H_1$ | $B_2$, $B_4$, $E_2$, 2 bis 7 | $C_2$, $D_2$, $G_2$, $H_2$, 1 | $A_1$, $A_2$, $B_1$, $B_3$ | Nur Abschnitt I |
| II | $A_1$, $A_2$, $D_1$, $G_1$, $E_1$, $F$, $H_1$, $B_3$ | $C_2$, $E_2$, 1,3 bis 7 | $B_2$, $B_4$, $D_2$, $G_2$, 2, $H_2$ | $B_1$, $C_1$ | Nur Abschnitt II |
| III | $A_1$, $A_2$, $B_1$, $B_3$, $G_1$, $E_1$, $F$, | $D_2$, $E_2$, 1,2,4 bis 7 | $B_2$, $B_4$, $C_2$, $G_2$, 3, $H_2$ | $C_1$, $D_1$, $H_1$ | Nur Abschnitt III |
| IV | $A_1$, $A_2$, $B_1$, $B_3$, $C_1$, $D_1$, $H_1$, $F$ | $E_2$, 1bis3, 5bis7 | $B_2$, $B_4$, $C_2$, $D_2$, 4, $G_2$, $H_2$ | $G_1$, $E_1$ | Nur Abschnitt IV — wird ins Freie entspannt |
| V | $A_1$, $A_2$, $B_1$, $B_3$, $C_1$, $D_1$, $G_1$, $H_1$ | 1 bis 4,6,7 | $E_2$, $B_2$, $B_4$, $C_2$, 5, $D_2$, $G_2$, $H_2$ | $E_1$, $F$ | Nur Abschnitt V |
| VI | $A_1$, $A_2$, $B_1$, $B_3$, $C_1$, $E_1$, $F$, $H_1$ | $G_2$, $E_2$, 1 bis 5, 7 | $B_2$, $B_4$, $C_2$, 6, $D_2$, $H_2$ | $D_1$, $G_1$ | Nur Abschnitt VI |
| VII | $A_1$, $A_2$, $B_1$, $C_1$, $E_1$, $F$, $D_1$, $G_1$ | $H_2$, $E_2$, 1 bis 6 | $B_2$, $B_4$, $C_2$, 7, $D_2$, $G_2$ | $B_3$, $H_1$ | Nur Abschnitt VII |

## Patentansprüche

1. Verfahren zur schnellen Herabsetzung des Drucks in kontinuierlich betriebenen Hochdruckpolymerisationssystemen, in denen Ethylen oder ein Gemisch aus Ethylen und mit Ethylen mischpolymerisierba-

9

ren Verbindungen bei Drücken von 500 bis 5000 bar und Temperaturen von 150 bis 400°C polymerisiert und die nichtumgesetzten Gasmengen nach Entspannen auf 200 bis 400 bar durch das Hochdruckkreisgassystem in das Polymerisationssystem zurückgeführt werden, auf einen Druck unterhalb des jeweiligen Reaktionsdrucks beim Überschreiten vorgegebener Druck- und/oder Temperaturgrenzwerte oder bei anderen Störungen durch Öffnen eines oder mehrerer am Hochdruckpolymerisationssystem angebrachter Entspannungsvorrichtungen und Überführen des entspannten heißen Reaktionsgemischs aus dem Polymerisationssystem über eine oder mehrere Entspannungsleitungen durch ein oder mehrere Abscheidesysteme in die Atmosphäre, dadurch gekennzeichnet, daß das Hochdruckpolymerisationssystem gleichzeitig mit der Einleitung des Entspannungsvorgangs in mehrere Teilabschnitte abgesperrt wird und daß lediglich der Teilabschnitt zur Atmosphäre entspannt wird, in dem die Auslösung für den Entspannungsvorgang liegt.

2. Verfahren nach Anspruch 1, dadurch gekennzeichnet, daß diejenigen Teilabschnitte, in denen die Auslösung für den Entspannungsvorgang nicht vorliegen, synchron mit der Einleitung der Entspannung zur Atmosphäre in das Hochdruckkreisgassystem entspannt werden.

3. Verfahren nach Anspruch 2, dadurch gekennzeichnet, daß durch einen Produktabscheider in das Hochdruckkreisgassystem entspannt wird.

**Claims**

1. A process for rapidly reducing the pressure in a continuous high pressure polymerization system, in which ethylene or a mixture of ethylene and compounds which are copolymerizable with ethylene is polymerized under from 500 to 5,000 bar and at 150 to 400°C and the unconverted amounts of gas are let down to 200-400 bar and then recycled through the high pressure recycle gas system into the polymerization system, to below the particular reaction pressure when predetermined limiting pressure and/or temperature values are exceeded or when other faults occur by opening one or more pressure-relief apparatuses mounted on the high pressure polymerization system and transferring the hot let-down reaction mixture from the polymerization system via one or more let-down lines through one or more separator systems into the atmosphere, wherein the high pressure polymerization system is divided into a plurality of isolated sections at the same time as the let-down process is triggered, and only the section in which the let-down process has been triggered is let down to the atmosphere.

2. A process as claimed in claim 1, wherein the sections in which the let-down process has not been triggered are let down into the high pressure recycle gas system in synchronization with triggering of the let-down to the atmosphere.

3. A process as claimed in claim 2, wherein letting down is effected through a product separator into the high pressure recycle gas system.

**Revendications**

1. Procédé pour la diminution rapide de la pression dans des systèmes de polymérisation à pression élevée travaillant en continu, dans lesquels on polymérise de l'éthylène ou un mélange d'éthylène et de composés copolymérisables avec l'éthylène, à des pressions de 500 à 5000 bars et des températures de 150 à 400°C et, après détente à 200-400 bars, on ramène les mélanges de gaz non convertis au système de polymérisation par l'intermédiaire du système de recyclage de gaz à pression élevée, jusqu'à une pression inférieure à la pression réactionnelle concernée lors du dépassement de valeurs limites de pression et/ou de température prescrites, ou aux cours d'autres perturbations, par l'ouverture d'une ou plusieurs installations de détente faisant partie de l'équipement du système de polymérisation à pression élevée et transfert du mélange réactionnel chaud détendu du système de polymérisation, par l'intermédiaire d'une ou plusieurs conduites de détente en passant par un ou plusieurs systèmes séparateurs ou de dépôt, dans l'atmosphère, caractérisé en ce que le système de polymérisation à pression élevée est fermé ou bloqué en plusieurs sections partielles, simultanément à l'amorce du processus de détente et en ce que l'on détend dans l'athmosphère uniquement la section partielle dans laquelle se trouve le déclenchement pour le processus de détente.

2. Procédé suivant la revendication 1, caractérisé en ce que celles des sections partielles dans lesquelles ne se trouve pas le déclenchement pour le processus de détente, sont détendues dans le système de recyclage de gaz à pression élevée en synchronisme avec l'amorce de la détente dans l'athmosphère.

3. Procédé suivant la revendication 2, caractérisé en ce que la détente dans le système de recyclage de gaz à pression élevée s'opère en passant par un séparateur de produits.

# FIG.1

EP 0 272 512 B1

FIG.2

EP 0 272 512 B1

VV

A$_1$
A$_2$

NV
I

1
B$_1$

STZ1
II

B$_2$

B$_3$

STZ2
VII

B$_4$

2
C$_1$

7

C$_2$

RZ1
III

H$_1$

H$_2$

D$_2$

3

D$_1$

RZ2
VI

6
G$_1$

G$_2$

NK

E$_2$

5

E$_1$

4

KA

WA

F

HD

V